Europäisches Patentamt

European Patent Office

Office européen des brevets

(11) Publication number: **0 424 176 A2**

## EUROPEAN PATENT APPLICATION

(21) Application number: 90311517.8

(51) Int. Cl.5: **G06K 15/12**

(22) Date of filing: **19.10.90**

(30) Priority: **20.10.89 GB 8923710**

(43) Date of publication of application:
**24.04.91 Bulletin 91/17**

(84) Designated Contracting States:
**BE CH DE ES FR GB IT LI NL SE**

(71) Applicant: **MINNESOTA MINING AND MANUFACTURING COMPANY**
**3M Center, P.O. Box 33427**
**St. Paul, Minnesota 55133-3427(US)**

(72) Inventor: **Lea, Michael Charles c/o**
**Minnesota 3M Research Ltd. Pinnacles**
**Harlow, Essex CM19 5AE(GB)**
Inventor: **Macdonald, Norman Rennie**
**7 Aynsworth Avenue Bishop Stortford**
**Hertfordshire CM23 2DG(GB)**

(74) Representative: **Bowman, Paul Alan et al**
**LLOYD WISE, TREGEAR & CO. Norman**
**House 105-109 Strand**
**London WC2R OAE(GB)**

(54) **Control of exposure energy delivery.**

(57) Printing on photo-sensitive materials is effected by a linear array (10) of light emitting diodes (LEDs) energised by a power supply unit 20. The LEDs ($10_1$ ... $10_x$) are simultaneously enabled by a strobe pulse (S). Each LED has an individual input to control whether or not it is energised during a strobe pulse (S). The different exposures for each pixel are achieved by selectively controlling the LEDs ($10_1$ ... $10_x$) in each of a series of weighted strobe pulses whose base durations are in a power of 2 series. For this end the exposure for each pixel along the line is stored as an n-bit word and successive bits are taken from the words by a bit slicer (38) to be entered in an array control memory (40). Due to transients mostly associated with the power supply (20), the energisation of the LEDs does not exactly follow the rectangular strobe pulses. A dual compensation technique is disclosed. A pulse generator (42) generates the base series of pulses synchronised with the bit slicer (38) and firstly this base series is modified by a compensation pulse generator (44) to add (or subtract) an increment from each of the weighted series of pulses. A second compensation is made for the transient effect itself being a function of the number of LEDs ($10_1$ ... $10_x$) to be turned on for any strobe pulse (S). To this a counter (46) connected to the bit slicer (38) provides a count (p) of the number of 1's which is further used by the compensation pulse generator to modify the actual duration of the strobe pulses (S). All these operations may be done by means of software control. In particular the compensation pulse generator may use a look up table of strobe pulse durations covering both the weighted base pulse durations and the number (p) of LEDs turned on. The look up table may be calibrated to the individual LED array (10). The compensation technique may also be applied in other printing arrays, such as those using liquid crystal shutters. These have turn-ON transients although the number-on effect here is small.

EP 0 424 176 A2

**Fig. 3**

## CONTROL OF EXPOSURE ENERGY DELIVERY

This invention relates to a method and apparatus for controlling the emission of energy, such as radiated energy, by an array of energy sources of the kind in which the sources of the array are activatable during the period of a common strobe or enable signal; and in which during such period individual devices are selectively activated in accord with respective data signals. Such control of activation is commonly referred to as bi-level and is usually realised as a simple ON or OFF in response to the state of a controlling binary data signal.

Arrays of the kind set forth above may be arrays of light-emitting diodes (LEDs). LED arrays of linear configuration having very closely spaced diodes are already available and are commonly known as LED bars or line arrays. It will be understood that light in this context includes radiation both within and outside the visible spectrum.

LED bars find application in printing where light-sensitive material to be irradiated in accord with the information to be printed is subject to a relative movement to the bar that is normal to the length of the bar. In applications in which the intensity of exposure of a photo-sensitive material is to be controlled, for example on a pixel by pixel basis, there are problems in controlling the energisation of LEDs with respect to their light output. Although there is a linear characteristic of emitted light intensity with respect to drive current, in practice drive currents cannot be sufficiently accurately controlled. A substantial variation is also found among individual LEDs in arrays currently available.

A better approach is to adopt bi-level control in which the LEDs selectively are switched ON or OFF.

Two types of imaging using bi-level controlled LED bars can be distinguished. In the first type, each pixel of the photo-sensitive medium experiences either maximum or zero exposure of a fixed duration by an element of the LED array to provide dots of maximum optical density on a background of minimum optical density. The other type of imaging is continuous tone requiring that each pixel receives an exposure over a continuously variable range or over a sufficiently large number of discrete levels as to mimic a continuous variation. This latter type of continuous, or quasi-continuous, variation is needed in areas such as high-quality colour reproduction. It is in connection with the needs of such high-quality reproduction that the present invention has been developed.

More particularly, the currently available LED arrays or bars are usually strobed to enable all the diodes simultaneously, the energisation or not of an individual diode during the strobe pulse period being dependent on the state of a data bit controlling the individual diode. To achieve a variable density control in the image being reproduced, it is proposed that the LEDs of a strobed array are driven in accord with a format which we shall refer to as bit slicing. For example, the required radiation intensity is represented by an $n$-bit word giving $2n$ intensity levels. An 8-bit word as is commonly used in digital systems and used here provides 256 exposure levels, the bits being successively weighted 128, 64, 32, 16, 8, 4, 2 and 1 respectively. In practice, an 8-bit word provides a fine enough grey scale.

A line of imaging is produced by energising the LEDs of an array in accord with the periods represented by respective 8-bit words. Because the individual diodes are strobed simultaneously, eight strobing signals are applied of durations weighted in accord with the bit position weighting in the 8-bit word. For each strobe signal an individual diode is energised or not in accord with the value of the bit at the respective bit position in the word controlling that diode.

Ideally in using this bit-slicing technique each diode is fully turned ON for the length of each appropriate strobe pulse. In practice there are transient effects caused by the drive electronics and/or the LED response which results in each LED being fully turned ON for a duration different to the length of the strobe pulse. With LEDs the inherent delay in device turn ON and turn OFF is very small. Our experiment has shown that the transient effects with LEDs are predominantly due to the power supply system in which heavy currents are required to be switched rapidly. The transient effect is found at both the rise and fall of a strobe pulse but is conveniently considered as combined to a turn-ON transient with an instantaneous turn-OFF. As will be shown this represents an energy loss on the ideal case in most circumstances. In bit-slicing techniques the exposure lost due to turn-ON transients is a function of the total number of times an individual LED is turned on. The effect of the loss is particularly noticeable when crossing a level at which a higher order bit is active or ceases to be active. For example 31 units of exposure are represented by the 8-bit word 00011111 (exposure times of 16 + 8 + 4 + 2 + 1) suffering five transient losses: but the next adjacent level of exposure of 32 units represented by 00100000 (a single exposure time of 32 units) has just one transient loss. This leads to a sudden jump in image density when crossing the 31/32 unit exposure boundary. Similar jumps occur at 15/16, 63/64 and 127/128.

The present invention enables compensation to be effected for these transient losses by providing a correction to each strobe pulse length that enables a diode to deliver the energy it should deliver if each pulse were to turn ON and turn OFF as a perfectly rectangular pulse without any transient. The situation becomes more complex in switching large and different numbers of diodes bit-by-bit. It has been found that the transient time itself changes with the number of LEDs turned ON. The compensation arrangement to be described takes account of the number of diodes turned ON at any time.

The prior art in imaging with line array devices has frequently involved the erasing of charge on photoconductor drums or belts (e.g. U.S. 4,255,042), where uniformity of exposure intensity across the bar is not critical. In situations where such uniformity is important, the art has concentrated on correcting for individual element intensity variations, either by current control (U.S. 4,588,883) or timing control (U.S. 4,074,320; U.S. 4,596,995; G.B. 2,154,776; G.B. 2,183,873; G.B. 1,594,151). Such corrections relate to the steady-state output of the device, and do not concern transient effects associated with switching on and off. Corrections have also been made for intensity variations relating to the number of elements switched on at a particular time (e.g. JP 62 218155; WO 8807729; G.B. 2,090,030). Again, these number-on corrections relate to the steady-state output, and do not correct for transient effects during switch-on and switch-off. In the Applicants' view, the above prior art does not meet the needs of high quality continuous-tone imaging via line array devices, particularly as regards control of the exposure.

The measures proposed in accord with the present invention are also extendable to compensate another problem that arises with LED bars. Currently LED bars for imaging may have in excess of four thousand individual devices. Each LED typically requires 5mA of drive current to turn it fully on. Thus in a large LED array the instantaneous current from the power supply may vary from little or no current to many amperes. Despite regulation of the power supply the energising voltage at the LED array can still vary so that the intensity produced by a fully turned ON LED varies in accord with the number of other LEDs simultaneously turned ON. It will be shown how pulse length compensation can also be applied to correct for this problem of varying energisation voltage.

According to one aspect of this invention there is provided apparatus in which an energy source is activated for energisation at a predetermined level in one or more of a prescribed series of intervals of differing durations to achieve a total activation period determining the effective energy output of the source, each such activation interval having associated therewith a transient effect whereby the energy delivered by said source differs from the value expected by maintaining said predetermined level for said activation interval, wherein the intervals comprise a base component determined in accord with a prescribed scale of weighting to each of which base components is added an increment such that the energy output is proportional to the total of the base components of those intervals in which the energy source is activated.

The weighting scale referred to above is preferably a power of 2 scale. This fits well with a digital control system. In a preferred implementation the energy source is driven in accord with the value represented by an n-bit binary word, and each of the prescribed series of intervals corresponds to the value of a respective bit position in the word.

Where the transient period is constant, the increment to be added to each base component has a fixed value during which the energy delivered is equal to that lost during the transient period due to the failure to achieve the predetermined level of energisation.

In another aspect of the invention there is provided apparatus in which a plurality of energy sources are selectively activated for energisation at a nominal level, such activation occurring in one or more of a prescribed series of intervals of differing durations to achieve a total activation period for each source determining the effective energy output of the source, each such activation interval having associated therewith a transient effect and/or a level of energisation that is a function of the number of sources simultaneously activated whereby the energy delivered by the activated source differs from the value expected by maintaining said nominal level for said activation interval, wherein the intervals comprise a base component determined in accord with a prescribed scale of weighting to each of which base components is added an increment dependent on the number of sources simultaneously energised, such that the energy output of each source is proportional to the total of the base components of those intervals in which that energy source is activated.

As already discussed a power of 2 weighting scale may be adopted. In a preferred embodiment to be described employing digital control each energy source is driven in accord with the value represented by a respective n-bit binary word, and each of the prescribed series of interval corresponds to the value of a respective bit position in the word.

In the apparatus of this other aspect of the inventions the transient effect may be present and increase with the number of sources simultaneously activated. More particularly, we are concerned with the case where the level of energisation of the sources is a function of the number of sources simultaneously activated and falls below the nominal level to an extent dependent on the activated number. Specific compensation techniques for this are discussed below.

The energy source or sources may comprise a light-emitting diode or an array of such diodes, e.g. a bar array as already discussed. Alternatively the source or sources may include a liquid crystal shutter or an array of such shutters.

In a still further aspect of the invention there is provided apparatus in which a plurality of selectively-activatable energy sources is energised from a common power source, the selective activation being effected as a bi-level control in a series of intervals such that in any interval of the series any selected source is activated for the whole of that interval, and each interval of the series being accompanied by a transient effect on the activated sources that is a function of the number of sources activated, wherein each interval comprises a base component and an increment dependent on the number of sources activated in that interval such that each source delivers an energy proportional to the duration of the base component.

In yet another aspect of the invention there is provided apparatus in which a plurality of selectively-activatable energy sources is energised from a common power source and in which the energisation level of the sources is dependent on the number of sources simultaneously activated, the selective activation being effected in a series of intervals such that in any interval of the series any selected source is activated for the whole of that interval, wherein each interval comprises a base component and an increment dependent on the number of sources activated in that interval such that each source delivers the same energy as it would have done had it alone been activated.

The present invention and its preferred practice to compensate for both the transient effect and the voltage variation effect discussed above will now be further described with reference to the accompanying drawings in which:

Figs. 1A and 1B shows the effect of and compensation for turn-ON transients for an LED driven in accord with a bit-slicing format;

Fig. 2 shows the effect of voltage drop on the energisation of an LED bar array;

Fig. 3 shows a block diagram of a circuit providing compensation for number-on effects in an LED bar; and

Fig. 4 shows the gating circuit for an individual LED in the bar, and

Figs. 5A and 5B illustrate a grey scale wedge generated without and with respectively the transient compensation taught by the present invention.

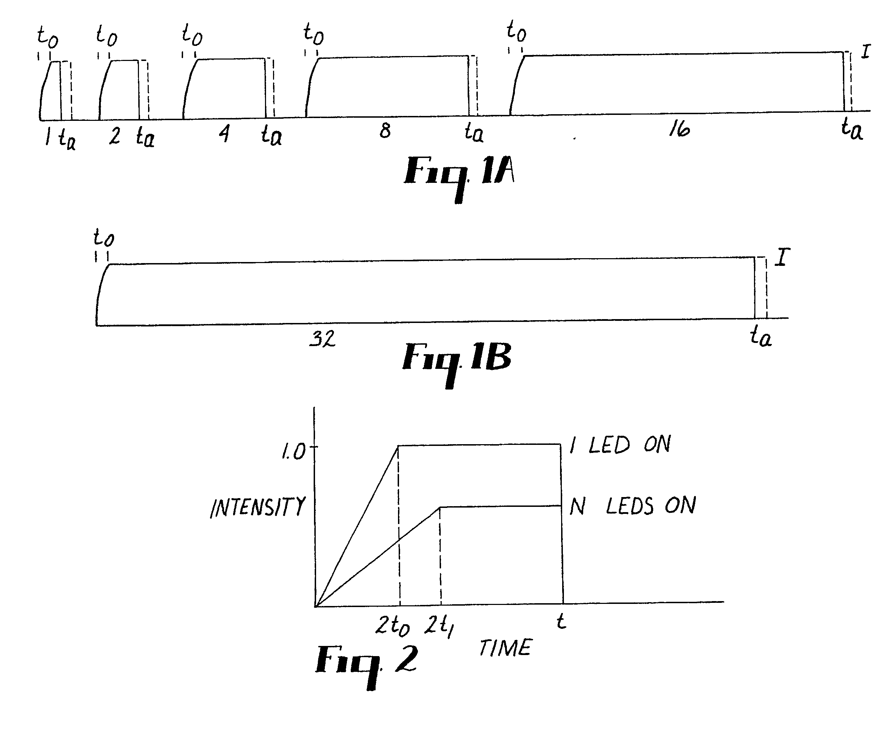

Referring to Figs. 1A and 1B, there is shown an example of the driving of one LED of an LED bar in accord with a bit-slicing format discussed above. Assume that the device is to be turned on for a total of 31 units of exposure time. The binary value is 011111 expressed in six bits. There are 5 strobe pulses required of respective lengths 1, 2, 4, 8 and 16 units. In practice there is a rise time and fall time associated with each pulse in terms of the energisation of the diode and in which there is normally a net loss of energy as compared with that of a perfect pulse turn-ON of the diode. This may be represented by a pulse having an equivalent ON transient at the start which is of a constant duration $t_0$ and having an instantaneous turn-OFF. At each pulse the LED is energised to some predetermined level I. The energy delivered by each pulse is proportional to the area of the pulse and for the ideal case each pulse would be rectangular so that the total energy delivered would be 31I. In practice each pulse has a transient loss, which will be considered as an equivalent, transient turn-ON time during which the energy level delivered is less than the ideal. The transient turn-ON is constant time $t_0$ and the energy loss, $E_L$, during that time is likewise fixed for each pulse. Thus in Fig. 1A the energy delivered is equal to $31I - 5E_L$.

By contrast if the diode is to be energised for an interval of 32 units to deliver an energy 32I, the binary value is now 100000, requiring just one long pulse of 32 units duration in the appropriate bit slice position. The same transient to applies with the same single pulse energy loss $E_L$. This is seen in Fig. 1B. The total energy delivered is $32I - E_L$. Thus in going from 31 to 32 units of exposure the actual increase in exposure is not I but $I + 4E_L$ leading to a jump in density in the photo-sensitive material exposed. Similar considerations will apply at any point on the binary-weighted scale of bit exposure times where a more significant bit enters or disappears from the value of the graduated scale.

It is now proposed to compensate this loss by adding to each pulse interval a fixed time increment $t_i$ during which the LED is on and delivers the energy that would otherwise be lost, i.e. $I.t_i = E_L$.

The value of the fixed increment is determined from experiment with the LED array in question and more on this is said below. As a result of the compensation now proposed the series of n time intervals corresponding to the bit positions of an n-bit word each comprise a base component - 1, 2, 4 etc. - in accord with the basic binary weighting to which is added a fixed increment $t_f$. The result is that the pulses with their transient effect deliver the energies they would have done in the ideal, rectangular pulse, case.

It will be appreciated that the form of compensation now proposed can be generally applied to energy sources in which there is a transient at the rise or the fall, or both, of the pulse.

It is now possible to move on to a more complex situation in which there are turn-on time effects which are dependent on the number of LEDs energised in an array and to add into this, the effect of power supply voltage variation with the number of LED selected for activation in any one strobe interval.

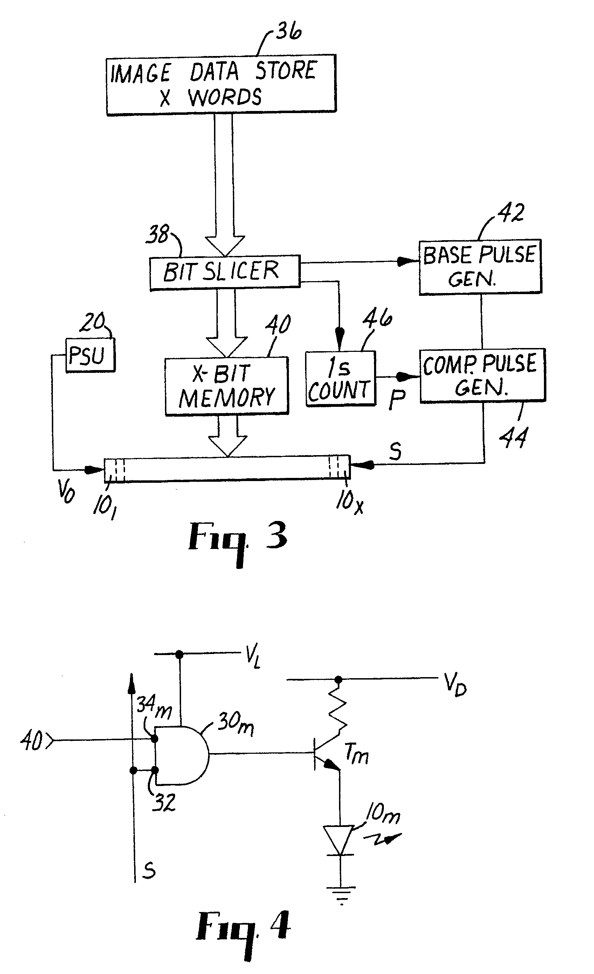

Before going to Fig. 2, a quantity called Relative Energy will be defined. It is the energy in a pulse as a fraction of the energy in a perfect pulse. This quantity is then independent of pulse length. For bit sliced exposure schemes we require that the relative energy be 1.0 (or 100%) for all pulse lengths and all numbers of energised LEDs. This will be achieved by lengthening each pulse to deliver the required amount of energy.

Fig. 2 shows an equivalent optical output pulse with length t when one LED, and when a number n LEDs are energised. These pulses show the net transient effect as a turn-ON transient and are simplified to show the turn-ON transient as a linear slope to the final value. For one energised LED there is a transient time of $2t_o$ and a constant final intensity which has been normalized to 1.0. The required amount of energy for the pulse is the area under a perfect pulse (t) and the energy loss is $t_0$, so the Relative Energy is $1 - t_o/t$. (The factor of two in the turn-ON time has been inserted for convenience and drops out when energy loss is considered.)

When n LEDs are energised there is a turn-ON time of $2t_1$ beyond which the intensity is a constant value i. This illustrates how two separate effects occur as more LEDs are energised:

1. The final intensity i drops.
2. The transient turn on time gets longer.

We will assume that both these effects vary linearly with the number of LEDs turned on:

$i = 1 - an$     (1)

$t_1 = t_o + cn$     (2)

n = number of LEDs on

a, c = constant coefficients.

While the diagrams show a linear turn on behaviour, this is not actually required by the following theory which simply assumes that there is some kind of transient which results in an energy loss. The turn on has been shown as linear for the sake of simplicity.

The Relative Energy, E, of the pulse is the area of the pulse divided by the area of the perfect pulse (t):

$$E = 1 - \frac{t_o}{t} - \left(a + \frac{c}{t} - \frac{at_o}{t}\right) n + \frac{acn^2}{t} \qquad - (3)$$

We now ask what corrected pulse length (t′) will give the required amount of energy (t).

$$t' = \frac{t}{(1 - an)} + t_o + cn \qquad - (4)$$

t = original pulse length

t′ = corrected pulse length

If a small number of LEDs are energised then this becomes:

$t' = t + t_o$     (5)

If we determine the value of $t_0$ and apply this correction to the pulse (but not the 'a' or 'c' corrections,) then equation 3 (the measured Relative Energy) becomes:

$$E = 1 - \left(a + \frac{c}{t}\right) n + \frac{acn^2}{t} \qquad - (6)$$

Experimental measurements of a and c show that the last term can be neglected. Thus, a Relative Energy vs number on plot for a given pulse length should be a straight line with a slope of:

Slope of Number On plot (with $t_0$ correction applied) $= a + \frac{c}{t}$     (7)

A plot of this slope vs 1/t will thus be a straight line with a slope of c and an intercept of a. This gives us a method of measuring a and c.

All of the above theory assumes that the corrected pulse length t′ is greater than the turn-ON time $2t_1$.

If the pulse length is less than the turn-ON time then we need to modify the corrections and must now make assumptions about the type of turn-ON behaviour.

If we assume a linear turn on behaviour then the correction required becomes:

$$t' = \frac{4t(t_o - cn)^{\frac{1}{2}}}{(1 - an)} \qquad - (8)$$

when $t < (t_o + on)(1 - an)$.

Although correction is possible for these short pulses, it should never be necessary. The system design should be done in such a way that pulses as short as the turn-ON transient are never used.

By way of example, the unit pulse (as at the left of Fig. 1A) may have a duration of say $1\mu S$. The inherent LED switching time is likely to be of the order of 50nS and is likely to be small as compared to base transient time $2t_o$. However it is possible for $2t_o$ itself to be very small but at the same time for there to be a significant number-on effect introducing an increasing transient $2t_i$ as described above. The problem may be realised by appreciating that even with a well-regulated power supply unit, transient voltage drops from 5V to 3.5V have been noted. The transient effects discussed include not only effects within the power supply unit but the supply bus. There may also be an effect within the LED bar itself. It is noted that the above described compensation does not take into account diode-to-diode variations in intensity characteristics within a bar.

The correction of the pulse length to compensate for transient energy loss can be done in another way which avoids making any assumptions as to the equations governing transient behaviour. Exposure measurements are made on the bar to be corrected for all the strobe pulse lengths and for all numbers of diodes ON. The output energies delivered are compared with the output energies required and the necessary additional time increments calculated and stored in a look-up table. This method requires more elaborate calibration for the individual bar but makes for more streamlined software routines in actual use, and hence may be preferred on this account.

Although the foregoing description has referred to adding increments of time to the base pulse length to compensate number on effects, it is contemplated that uses could arise where the nature of transients produced an energy output above rather than below that required. In such a case the pulse length needs to be shortened. It will be understood, therefore, that references in the appended claims to adding increments includes subtraction, or put another way, adding negative time increments.

The teachings of this invention can be applied with the existing types of LED bar currently on the market. Examples of these are the HLB44OA from Hitachi and the XLH2200 from Oki.

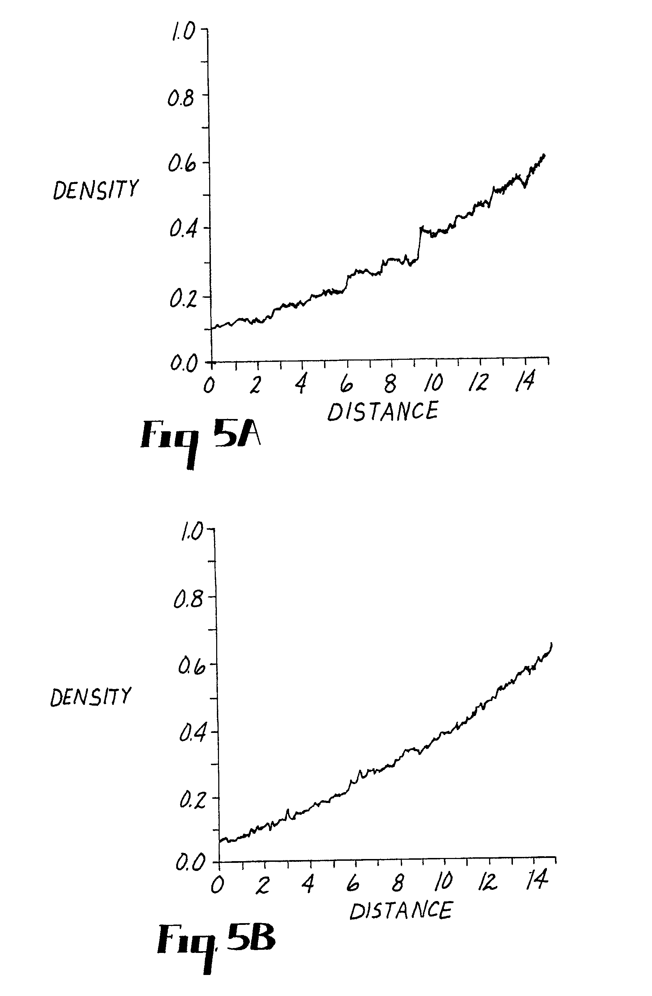

Fig. 3 shows schematically how the compensation technique described with reference to Fig. 2 is implemented to achieve the correction expressed in equation (4). A LED bar is as shown at 10 comprising an array of diodes $10_1 \ldots 10_x$ each providing the exposure of a pixel on the photo-sensitive material (not shown) that is being imaged. The bar 10 is supplied with power from a DC-supply 20. Within the bar each LED is driven by a circuit such as shown in Fig. 4 where the LED $10_m$ is energised by an associated control transistor $T_m$ connected to the supply bus line $V_D$ within the bar. Also within the bar is the control logic for the array connected to a separate bus line $V_L$. In Fig. 4 this is shown as including a respective AND-gate $30_m$ controlling the switching of transistor $T_m$. The gate $30_m$ has an input 32 which is controlled by a general enable or strobe signal S applied simultaneously to all devices within the bar. It also has an individually addressed input $34_m$ whose state determines whether or not diode $10_m$ is turned-ON during a given strobe pulse.

The image data for selectively activating the LEDs of the arrays via inputs $32_1$-$32_x$ is contained in an image intensity data store 36 in which a line of data is stored as x parallel binary words, one for each diode. For explanatory purposes, 8-bit words will be assumed to give the 256 intensity levels discussed above. These words are applied to bit-slicer 38 through successive bit positions 1 to 8, and the sliced bit data is held in memory 40. Thus successively memory 40 will hold all the least significant bits from the intensity-determining words, then the bits from the next bit position, and so on up to the most significant bits (or vice versa). Thus after each loading the memory 40 will hold a string of bits to determine the ON or OFF state of each of the LEDs $10_1$ - $10_x$. The currently available LED bars have on-bar latches to store the bits for each diode. Consequently having loaded all the latches, the strobing of the bar may occur while the memory 40 is acquiring the next set of bit position data. The data is in practice transferred serially, typically at clock rates around 10MHz.

Synchronized to the bit-slicer 38 is a base pulse length generator 42 which generates the digital values of a series of pulses of durations 1, 2, 4, 8, 32, 64 and 128 time units respectively as the bit-slicer advances from the least significant to the most significant bit of the words determining the exposure times required for the LEDs. This value is applied to a compensated pulse length generator 44 which generates the strobe pulses S in accordance with the base component times from generator 42 modified by a time increment dependent on the number of diodes to be turned on at any bit slice. To this end a count p is made by a unit 46 of the number of binary "1's" in the bit slice taken by slicer 38, where a "1" value is taken to mean that the relevant diode is to be turned on. Thus the pulse length from base generator 42 has added to it (all at a digital level) a value calculated according to equation (4) above, where t is now the digital value from generator 42 and n in the equation is the value of p obtained from unit 46. The corrected digital value representing $t'$ in equation (4) is converted to an analogue value and applied as a strobe pulse to the LED bar 10.

Thus as each set of data words for the pixels of the one line of imaging are bit-sliced, the pulse generation of Fig. 3 goes through a cycle of eight steps of differing strobe duration, each step being comprised of a base component length to which is added an increment dependent on the number of LEDs to be activated at that step. This compensates both the transient turn-on time and the voltage energisation level in accord with equation (4).

Although Fig. 3 shows a number of separate units for performing the functions described, it will be understood that all the digital processing up to the generation of the analogue strobe pulses can be done by a suitably programmed microprocessor.

The compensation pulse generator 44 can alternatively work with a look-up table stored in a separate memory. As mentioned above the look-up table contains the necessary correction for each value of base component pulse from generator 42 and all numbers of diodes on p. The value from the look-up table for the current base component duration and p is then added to the base component value.

The embodiment described above has dealt with the use of an LED bar as the energy source. Another form of array is an LCD shutter in which a single energising light source selectively exposes the photosensitive material by its light being selectively gated through an array of liquid crystal devices. In this case the transient effects are less likely to be due to power supply problems since the current drawn is small but are more likely to be due to the relatively slow transient responses of the LCD devices themselves. However, it is not anticipated that there will be a significant number on effect in this case.

If necessary, temperature compensation can also be incorporated to correct for variations in intensity due to temperature. Such temperature compensation requires a temperature measurement at the LED bar or LCD shutter array. The compensation can be applied to the digital values representing the base component of the activation intervals.

To exemplify the improvement offered by the combined transient and intensity compensation in switching the LEDs as taught above with reference to equations (1)-(7), Figs. 5A and 5B show microdensitometer scans across a density wedge in which exposure increases linearly with distance (abscissa) in a quasi-continuous manner as discussed above. The exposure was made on 3M 5X 560 film using a Hitachi HLB440A LED bar.

Fig. 5A shows the variation in density (ordinate) along the wedge with no transient compensation applied. Sudden jumps are evident. Fig. 5B shows a similar scan where transient compensation is applied according to equation (4). The jumps in density due to transient effects are much reduced. In this example $t_0$, a and c were determined to have the following values:

$t_0 = 2\mu S$

$a = 2.5 \times 10^{-5}$ per LED

$c = 4.0 \times 10^{-5}\ \mu S$ per LED.

## Claims

1. Apparatus in which an energy source is activated for energisation at a predetermined level in one or more of a prescribed series of intervals of differing durations to achieve a total activation period determining the effective energy output of the source, each such activation interval having associated therewith a transient effect whereby the energy delivered by said source differs from the value expected by maintaining said predetermined level for said activation interval, wherein the intervals comprise a base component determined in accord with a prescribed scale of weighting to each of which base components is added an increment such that the energy output is proportional to the total of the base components of those intervals in which the energy source is activated.

2. Apparatus as claimed in Claim 1 in which said weighting scale is a power of 2 scale.

3. Apparatus as claimed in Claim 2 in which said energy source is driven in accord with the value represented by an n-bit binary word, and each of said prescribed series of intervals corresponds to the value of a respective bit position in the word.

4. Apparatus as claimed in Claim 1, 2 or 3 in which said transient period is a constant and said increment has a fixed value during which the energy delivered is equal to that lost during the transient period due to the failure to achieve said predetermined level.

5. Apparatus in which a plurality of energy sources are selectively activated for energisation at a nominal level, such activation occurring in one or more of a prescribed series of intervals of differing durations to achieve a total activation period for each source determining the effective energy output of the source, each such activation interval having associated therewith a transient effect and/or a level of energisation that is a function of the number of sources simultaneously activated whereby the energy delivered by the activated source differs from the value expected by maintaining said nominal level for said activation interval, wherein the intervals comprise a base component determined in accord with a prescribed scale of weighting to each of which base components is added an increment dependent on the number of sources simultaneously energised, such that the energy output of each source is proportional to the total of the base components of those intervals in which that energy source is activated.

6. Apparatus as claimed in Claim 5 in which said weighting scale is a power of 2 scale.

7. Apparatus as claimed in Claim 6 in which each energy source is driven in accord with the value represented by a respective n-bit binary word, and each of said prescribed series of intervals corresponds to the value of a respective bit position in the word.

8. Apparatus as claimed in Claim 5, 6 or 7 in which said transient effect is present and is such as to increase with the number of sources simultaneously activated.

9. Apparatus as claimed in Claim 5, 6, 7 or 8 in which the level of energisation of said sources is a function of the number of sources simultaneously activated and falls below said nominal level to an extent dependent on said number.

10. Apparatus as claimed in any one of Claims 1 to 4 in which said energy source comprises a light-emitting diode or a liquid crystal shutter.

11. Apparatus as claimed in any one of Claims 5 to 8 in which said energy sources comprise an array of light-emitting diodes, or of liquid crystal shutters.

12. Apparatus in which a plurality of selectively-activatable energy sources is energised from a common power source, the selective activation being effected as a bi-level control in a series of intervals such that in any interval of the series any selected source is activated for the whole of that interval, and each interval of the series being accompanied by a transient effect on the activated sources that is a function of the number of sources activated, wherein each interval comprises a base component and an increment dependent on the number of sources activated in that interval such that each source delivers an energy proportional to the duration of the base component.

13. Apparatus in which a plurality of selectively-activatable energy sources is energised from a common power source and in which the energisation level of the sources is dependent on the number of sources simultaneously activated, the selective activation being effected in a series of intervals such that in any interval of the series any selected source is activated for the whole of that interval, wherein each interval comprises a base component and an increment dependent on the number of sources activated in that interval such that each source delivers the same energy as it would have done had it alone been activated.

Fig. 1A

Fig. 1B

Fig. 2

EP 0 424 176 A2

36

IMAGE DATA STORE
X WORDS

38

BIT SLICER

42

BASE PULSE GEN.

20

PSU

40

X-BIT MEMORY

46

1s COUNT

P

COMP. PULSE GEN.

44

$V_0$    $10_1$    S    $10_X$

**Fig. 3**

$V_L$

$V_D$

$34_m$

$30_m$

40

32

$T_m$

$10_m$

S

**Fig. 4**

Fig 5A

Fig. 5B